# FASCICULE DE BREVET EUROPEEN

(11) **EP 1 929 613 B1**
(45) Date de publication et mention de la délivrance du brevet: **24.06.2009**
(21) Numéro de dépôt: 06793935.5
(22) Date de dépôt: 29.09.2006
(51) Int. Cl.: H02K 15/06, H02K 15/00

(54) **OUTILLAGE DE REALISATION DE BOBINAGES D'UN STATOR D'UNE MACHINE ELECTRIQUE ET PROCEDE DE REALISATION DE BOBINAGE**
VORRICHTUNGEN ZUM HERSTELLEN VON SPULEN EINES STATORS EINER ELEKTRISCHEN MASCHINE UND VERFAHREN ZUM HERSTELLEN VON SPULEN
EQUIPMENT FOR PRODUCING COILS OF A STATOR OF AN ELECTRICAL MACHINE AND METHOD FOR MAKING COILS

(30) Priorité: 30.09.2005 FR 0510019
(43) Date de publication de la demande: 11.06.2008
(73) Titulaire: THALES, 92200 Neuilly sur Seine (FR)
(72) Inventeur: MOYA, Cyril, F-78400 Chatou (FR)
(74) Mandataire: Collet, Alain
(86) Numéro de dépôt international: PCT/EP2006/066939
(87) Numéro de publication internationale: WO 2007/036578

(56) Documents cités:
- EP-A- 1 324 461
- US-A1- 2002 046 779
- PATENT ABSTRACTS OF JAPAN vol. 012, no. 232 (E-628), 30 juin 1988 (1988-06-30) -& JP 63 023533 A (HITACHI LTD), 30 janvier 1988 (1988-01-30)
- PATENT ABSTRACTS OF JAPAN vol. 008, no. 021 (E-224), 28 janvier 1984 (1984-01-28) & JP 58 182440 A (ENTATSUKU KK), 25 octobre 1983 (1983-10-25)

## Description

L'invention concerne un outillage de réalisation de bobinages d'un stator d'une machine électrique et un procédé de réalisation de bobinage. L'invention trouve une utilité particulière dans la réalisation de bobinage de machine électrique de forte puissance. Les bobinages comportent plusieurs enroulements. Chaque enroulement est formé par connexion d'épingles conductrices enfilées dans des encoches d'un circuit magnétique du stator. Les épingles sont réalisées à partir de barreau conducteurs le plus souvent de section rectangulaire en alliage de cuivre. Les barreaux sont pliés pour former des épingles en forme de U. Par la suite on appellera « bras » chaque branche du U et « noeud » la partie centrale du U reliant les deux bras. Les extrémités libres des bras, c'est à dire les extrémités des bras opposées au noeud, sont raccordées entre elles selon un schéma de câblage du bobinage pour former les enroulements. Ces raccordements forment un chignon dans lequel sont également raccordés des conducteurs permettant d'alimenter les enroulements. Dans le chignon chaque bras est plié pour se rapprocher d'un autre bras auquel il doit être raccordé.

Le fonctionnement de la machine électrique provoque un échauffement du stator essentiellement du au passage de courants dans les enroulements. Un moyen efficace de refroidir le stator est d'y faire circuler un fluide caloporteur tel que par exemple de l'huile que l'on fait circuler dans des canaux du stator à proximité immédiate des épingles. Le chignon gène la circulation de l'huile principalement à cause des plis des bras. En effet il est aisé de plier les extrémités libres des bras immédiatement à la sortie des encoches qu'ils occupent. Pour ménager un passage d'huile entre les bras à proximité immédiate du circuit magnétique, il est nécessaire de plier les bras en laissant une partie du bras s'étendre dans le prolongement de l'encoche qu'il occupe avant de procéder au pliage. Ceci est particulièrement délicat à opérer manuellement notamment à cause de l'élasticité du matériau employé pour réaliser les épingles.

L'invention vise à pallier ce problème en proposant un outillage permettant de simplifier l'opération de pliage des bras d'épingles. Cet outillage permet de garantir une distance reproductible entre le circuit magnétique et le pliage de chaque bras. De façon plus générale, un outillage conforme à l'invention permet d'améliorer la reproductibilité de la forme du chignon et de l'ensemble des connexions du stator.

A cet effet, l'invention a pour objet un outillage de réalisation de bobinage d'un stator d'une machine électrique, le bobinage comportant plusieurs enroulements, chaque enroulement étant formé par connexion de bras d'épingles conductrices insérées dans des encoches d'un circuit magnétique du stator, **caractérisé en ce qu**'il comporte un conformateur de révolution suivant un axe, le conformateur étant destiné à être placé à l'intérieur d'extrémités libres des bras et en appui sur le circuit magnétique, une première série de goupilles en même nombre que d'encoches et destinées à pénétrer chacune dans un trou du conformateur, chaque trou étant percé suivant un axe, les axes des trous étant concourants en un premier point de l'axe de révolution du conformateur, chaque goupille étant destinée à séparer deux bras d'épingle insérés dans deux encoches contiguës afin d'orienter les bras dans une direction déterminée, et distincte de la direction des bras dans leur encoche.

L'invention a également pour objet un procédé de réalisation de bobinage d'un stator d'une machine électrique, le bobinage comportant plusieurs enroulements, chaque enroulement étant formé par connexion de bras d'épingles conductrices enfilées dans des encoches d'un circuit magnétique du stator, le procédé utilisant un outillage selon l'une des revendications précédentes, **caractérisé en ce qu**'il consiste à enchaîner les opérations suivantes :
- insérer les épingles dans les encoches suivant un schéma de câblage du bobinage ;
- mettre en place le premier conformateur suivant l'axe de révolution du circuit magnétique du côté libre des bras en appui contre le circuit magnétique ;
- mettre en place la première série de goupilles ;
- plier les bras chacun en s'appuyant sur une goupille.

L'invention sera mieux comprise et d'autres avantages apparaîtront à la lecture de la description détaillée d'un mode de réalisation donné à titre d'exemple, description illustrée par le dessin joint dans lequel :
la figure 1 représente un outillage conforme à l'invention et mis en place pour assurer le câblage d'un stator ;
la figure 2 représente une épingle hors de son encoche ;
la figure 3 représente en coupe partielle deux encoches contiguës dans un plan perpendiculaire à l'axe du stator.

Par souci de clarté, les mêmes éléments porteront les mêmes repères dans les différentes figures.

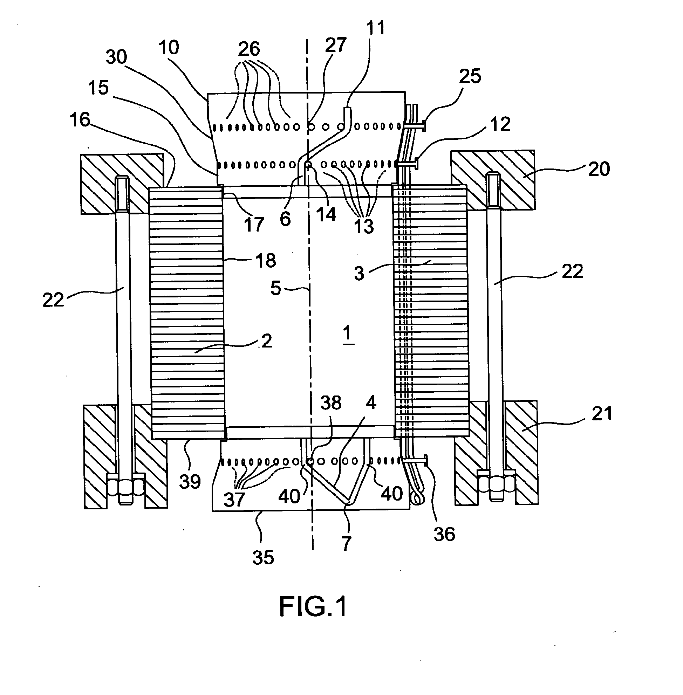

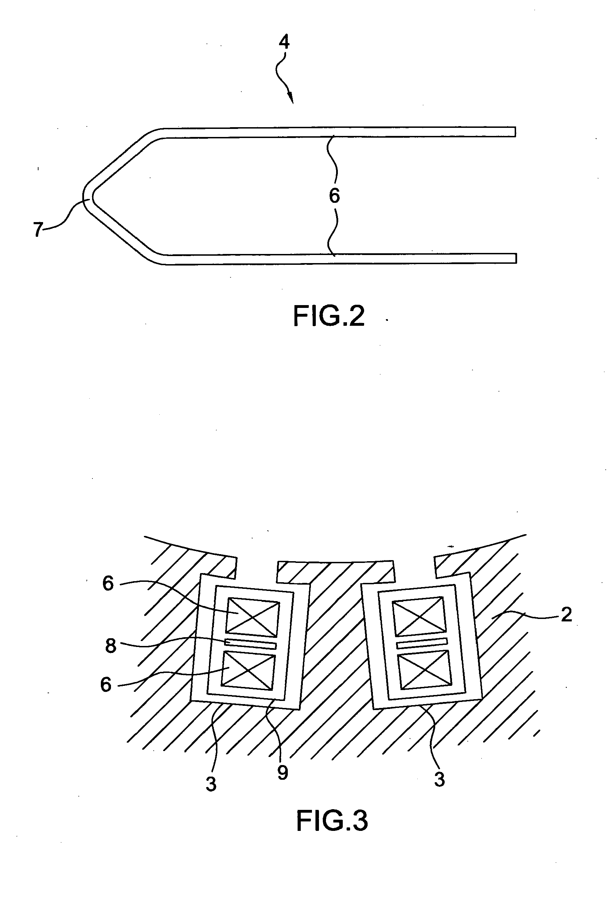

La figure 1 représente le stator 1 d'une machine électrique. Le stator 1 comporte un circuit magnétique 2 et un bobinage comportant plusieurs enroulements. Le circuit magnétique 2 est formé par un empilage de tôles dans lesquelles sont réalisées des encoches 3 permettant de recevoir des épingles 4 formant les éléments conducteurs du bobinage. Le circuit magnétique est de révolution autour d'un axe 5. Les tôles sont plane et leur plan est perpendiculaire à l'axe 5. Chaque enroulement étant formé par connexion de bras 6 d'épingles insérés dans les encoches 3. Pour ne pas surcharger la figure, seules quelques épingles 4 ont été représentées. Une épingle 4 est formée de deux bras 6 reliés par un noeud 7. Sur la figure 2, une épingle 4 a été représentée avant son montage dans une encoche 3. Généralement les encoches 3 sont remplies par plusieurs faisceaux d'épingles 4. Un exemple de remplissage des encoches 3 est donné sur la figure 3. Sur les figures 1 et 3, deux faisceaux ont été représentés. Les différents faisceaux peuvent être séparés par des isolants électriques 8 et/ou des canaux permettant la circulation d'un fluide caloporteur, comme par exemple de l'huile servant au refroidissement du stator lors de son fonctionnement. Un isolant électrique 9 peut entourer l'ensemble des éléments, bras 6 et isolant 8, se trouvant dans une encoche 3.

Selon l'invention, un outillage de réalisation du bobinage du stator 1 comporte un conformateur 10 de révolution. Le conformateur est placé à l'intérieur d'extrémités libres 11 des bras 6 et en appui sur le circuit magnétique 2. L'axe de révolution du conformateur est confondu avec l'axe 5 du circuit magnétique 2 et portera par la suite le même repère 5. L'outillage comporte en outre une première série de goupilles 12 en même nombre que d'encoches 3 et destinées à pénétrer chacune dans un trou 13 du conformateur 10. Pour ne pas surcharger la figure, seule une goupille 13 a été représentée. Chaque trou 13 est percé suivant un axe, les axes des trous 13 étant concourants en un premier point 14 de l'axe 5 de révolution du conformateur 10. Chaque goupille 12 est destinée à séparer deux bras 6 enfilés dans deux encoches 3 contiguës afin d'orienter les bras 6 dans une direction déterminée et distincte de la direction des bras 6 dans leur encoche 3. Autrement dit, une fois les goupilles 12 mises en place dans leur trou 13 respectif, il est possible de plier le bras 6 venant en appui contre une goupille 12 pour l'orienter dans une direction différente de celle de l'encoche 3 qu'il occupe. L'appui du conformateur 10 sur le circuit magnétique 2 est par exemple réalisé au moyen d'un épaulement 15 du conformateur 10 venant en appui contre une tôle d'extrémité 16 du circuit magnétique 2. Le conformateur 10 est de plus centré par rapport au circuit magnétique 2 au moyen d'une partie cylindrique 17 du conformateur 10 ajustée dans un alésage 18 du circuit magnétique 2. L'alésage 18 est par exemple utilisé pour mettre en place un rotor de la machine électrique, rotor non représenté sur la figure 1.

Avantageusement, le premier point 14 est situé à une distance déterminée non nulle de l'épaulement 15. Ceci permet de ne plier les bras 6 qu'à partir d'une certaine distance de la tôle d'extrémité 16 et donc de garantir une distance reproductible entre le circuit magnétique 2 et le pliage de chaque bras 6. Le fait de conserver les bras 6 dans l'alignement de leurs encoches 3 respectives permet de mieux faire circuler le fluide caloporteur au voisinage du circuit magnétique 2 et plus précisément le long de la tôle d'extrémité 16.

L'outillage comporte également deux bagues 20 et 21 assemblées au moyen de goujons 22 et permettant le maintien des tôles du circuit magnétique 2 pendant la réalisation du bobinage.

Avantageusement, l'outillage comporte une deuxième série de goupilles 25 en même nombre que d'encoches 3 et destinées à pénétrer chacune dans un trou 26 du conformateur 10. Chaque trou 26 est percé suivant un axe. Les axes des trous 26 sont concourant en un second point 27 de l'axe 5 de révolution du conformateur 10. Le point 27 est distant du point 14. Chaque goupille 25 est destinée à orienter les bras 6 dans une direction parallèle à la direction des bras 6 dans leur encoche 3. Comme pour les goupilles 12, une fois les goupilles 25 mises en place dans leur trou respectif, il est possible de plier le bras 6 venant en appui contre une goupille 25 pour l'orienter dans une direction parallèle de celle de l'encoche 3 qu'il occupe.

Avantageusement, le conformateur 10 comporte une partie conique 30 destinée à éloigner les bras 6 le l'axe 5 du circuit magnétique 2. La partie conique 30 vient au contact des bras 6 lorsque l'on met en place le conformateur 10 en appui contre le circuit magnétique 2. les bras 6 suivent alors la forme de la partie conique pour s'éloigner de l'axe 5. Ceci donne la forme intérieure du chignon.

Avantageusement, l'outillage comporte un second conformateur 35 également de révolution. Le second conformateur 35 est destiné à être placé à l'intérieur des noeuds 7 et en appui sur le circuit magnétique 2. L'outillage comporte en outre une troisième série de goupilles 36 en même nombre que d'encoches 3 et destinées à pénétrer chacune dans un trou 37 du second conformateur 35. Pour ne pas surcharger la figure, seule une goupille 36 a été représentée. Chaque trou 37 est percé suivant un axe, les axes des trous 37 étant concourant en un point 38 de l'axe 5 de révolution du second conformateur 35. Chaque goupille 36 est destinée à séparer deux bras 6 enfilés dans deux encoches 3 contiguës afin positionner les noeuds 7 à une distance déterminée du circuit magnétique 2. Comme pour le conformateur 10, le conformateur 35 permet de conserver les bras 6 sans être insérés totalement dans leur encoche respective et ménager une partie rectiligne des bras 6 hors des encoches 3. Ceci permet de mieux faire circuler le fluide caloporteur au voisinage du circuit magnétique 2 et plus précisément le long d'une tôle d'extrémité 39 opposée à la tôle d'extrémité 16. En effet, Les épingles 4 sont préformées avant leur insertion dans les encoches 3. Les bras 6 sont rectilignes sur leur plus grande partie, partie destinée à être insérée dans les encoches 3, et au voisinage du noeud 7, les bras 6 comportent des plis 40. La position du point 38 par rapport à la tôle d'extrémité 39 permet d'appuyer les plis 40 contre la troisième série de goupilles 36. Le fait d'utiliser les goupilles 36 facilite la réalisation de la forme du chignon comportant les noeuds 7.

Un procédé de réalisation de bobinage utilisant un outillage tel que décrit précédemment consiste à enchaîner les opérations suivantes :
- insérer les épingles 4 dans les encoches 3 suivant un schéma de câblage du bobinage ;
- mettre en place le premier conformateur 10 suivant l'axe 5 de révolution du circuit magnétique 2 du côté libre des bras 6 en appui contre le circuit magnétique 2 ;
- mettre en place la première série de goupilles 12 ;
- plier les bras 6 chacun en s'appuyant sur une goupille 12.

Avant d'insérer les épingles 4 dans les encoches 3, il est possible d'insérer dans les encoches 3 des fourreaux isolants dans lesquels sont à leur tour insérées les épingles 4 lorsque celles-ci ne sont pas isolées.

Lorsque l'on insère dans les encoches 3 plusieurs niveaux de bras 6 comme représenté sur le figure 1, les différents niveaux sont généralement pliés avec une orientation différente. Par exemple, on commence le pliage par le niveau le plus éloigné de l'axe 5 dans un sens horaire autour de l'axe 5. le pliage se poursuit par le niveau le plus proche de l'axe 5 dans un sens anti-horaire autour de l'axe 5.

Avantageusement, après avoir plié les bras 6 chacun en s'appuyant sur une goupille 12 de la première série le procédé consiste à enchaîner les opérations suivantes :
- mettre en place la deuxième série de goupilles 25 ;
- plier les bras 6 en s'appuyant sur une goupille 25 de la deuxième série de façon à orienter les bras 6 dans une direction parallèle à la direction des bras 6 dans leur encoches 3 ;
- réaliser le raccordement des bras 6 selon un schéma de câblage du bobinage.

Cette dernière opération de raccordement est par exemple réalisée au moyen de bagues insérées dans deux bras 6 voisins au niveau de l'extrémité libre au-delà des goupilles 25. ces bagues sont ensuite brasées.

Avantageusement, avant d'insérer les épingles 4 dans les encoches 3, on met en place le second conformateur 35 en appui sur le circuit magnétique 2 et on met en place la troisième série de goupilles 36 dans les trous 37. Ainsi les plis 40 viennent en appui contre les goupilles 36 pour garantir une même distance entre les noeuds 7 et le circuit magnétique 2. L'appui des plis 40 sur les goupilles 36 permet aussi de conserver une certaine longueur des bras 4 dans leur partie rectiligne hors des encoches 3.

## Revendications

1. Outillage de réalisation de bobinage d'un stator (1) d'une machine électrique, le bobinage comportant plusieurs enroulements, chaque enroulement étant formé par connexion de bras (6) d'épingles (4) conductrices insérées dans des encoches (3) d'un circuit magnétique (2) du stator (1), **caractérisé en ce qu'**il comporte un conformateur (10) de révolution suivant un axe (5), le conformateur (10) étant destiné à être placé à l'intérieur d'extrémités libres des bras (6) et en appui sur le circuit magnétique (2), l'axe (5) de révolution du conformateur (10) étant confondu avec l'axe (5) du circuit magnétique (2), une première série de goupilles (12) en même nombre que d'encoches (3) et destinées à pénétrer chacune dans un trou (13) du conformateur (10), chaque trou (13) étant percé suivant un axe, les axes des trous (13) étant concourants en un premier point (14) de l'axe (5) de révolution du conformateur (10), chaque goupille (12) étant destinée à séparer deux bras (6) d'épingle (4) insérés dans deux encoches (3) contiguës afin d'orienter les bras (6) dans une direction déterminée, et distincte de la direction des bras (6) dans leur encoche (3).

2. Outillage selon la revendication 1, **caractérisé en ce que** le premier point (14) est situé à une distance déterminée d'une surface d'appui (15) du conformateur (10) sur le circuit magnétique (2) et **en ce que** la distance déterminée est non nulle.

3. Outillage selon l'une des revendications précédentes, **caractérisé en ce qu'**il comporte une deuxième série de goupilles (25) en même nombre que d'encoches (3) et destinées à pénétrer chacune dans un trou (26) du conformateur (10), chaque trou (26) étant percé suivant un axe, les axes des trous étant concourant en un second point (27) de l'axe (5) de révolution du conformateur (10), le second point (27) étant distant du premier point (14), chaque goupille (25) de la deuxième série étant destinée à orienter les bras (6) dans une direction parallèle à la direction des bras (6) dans leur encoche (3).

4. Outillage selon l'une des revendications précédentes, **caractérisé en ce que** le conformateur (10) comporte une partie conique (30) destinée à éloigner les bras (6) des épingles (4) d'un axe (5) du circuit magnétique (2).

5. Outillage selon l'une des revendications précédentes, **caractérisé en ce qu'**il comporte un second conformateur (35) de révolution suivant un axe (5), le second conformateur (35) étant destiné à être placé à l'intérieur de noeuds (7) des épingles (4) et en appui sur le circuit magnétique (2), une troisième série de goupilles (36) en même nombre que d'encoches (3) et destinées à pénétrer chacune dans un trou (37) du second conformateur (35), chaque trou (37) étant percé suivant un axe, les axes des trous (37) étant concourant en un point (38) de l'axe (5) de révolution du second conformateur (35), chaque goupille (36) de la troisième série étant destinée à séparer deux bras (6) d'épingle (4) enfilés dans deux encoches (3) contiguës afin positionner les noeuds (7) d'épingle (4) à une distance déterminée du circuit magnétique (2).

6. Procédé de réalisation de bobinage d'un stator (1) d'une machine électrique, le bobinage comportant plusieurs enroulements, chaque enroulement étant formé par connexion de bras (6) d'épingles (4) conductrices insérées dans des encoches (3) d'un circuit magnétique (2) du stator (1), le procédé utilisant un outillage selon l'une des revendications précédentes, **caractérisé en ce qu'**il consiste à enchaîner les opérations suivantes :
• insérer les épingles (4) dans les encoches (3) suivant un schéma de câblage du bobinage ;
• mettre en place le premier conformateur (10) suivant l'axe (5) de révolution du circuit magnétique (2) du côté libre des bras (6) en appui contre le circuit magnétique (2) ;
• mettre en place la première série de goupilles (12) ;
• plier les bras (6) chacun en s'appuyant sur une goupille (12) de la première série.

7. Procédé selon la revendication 6, utilisant un outillage selon la revendication 3, **caractérisé en ce qu'**il consiste après avoir plié les bras (6) chacun en s'appuyant sur une goupille (12) de la première série à enchaîner les opérations suivantes :
• mettre en place la deuxième série de goupilles (25) ;
• plier les bras (6) en s'appuyant sur une goupille (25) de la deuxième série de façon à les orienter dans une direction parallèle à la direction des bras (6) dans leur encoches (3) ;
• réaliser le raccordement des bras (6) selon un schéma de câblage du bobinage.

8. Procédé selon l'une quelconque des revendications 6 ou 7, utilisant un outillage selon la revendication 5, **caractérisé en ce qu'**il consiste avant d'insérer les épingles (4) dans les encoches (3), on met en place le second conformateur (35) en appui sur le circuit magnétique (2) et on met en place la troisième série de goupilles (36) dans les trous (37).

## Claims

1. Equipment for producing coils of a stator (1) of an electrical machine, the coil comprising several windings, each winding being formed by connecting arms (6) of conducting pins (4) inserted into slots (3) of a magnetic circuit (2) of the stator (1), **characterized in that** it comprises a shaper (10) axisymmetric about an axis (5), the shaper (10) being designed to be placed inside free ends of the arms (6) and in contact with the magnetic circuit (2), the axis of revolution (5) of the shaper (10) being merged with the axis (5) of the magnetic circuit (2), a first series of guide-pins (12) equal in number to the slots (3) and designed so that each penetrates into a hole (13) of the shaper (10), each hole (13) being drilled along an axis, the axes of the holes (13) meeting at a first point (14) on the axis of revolution (5) of the shaper (10), each guide-pin (12) being designed to separate two arms (6) of pins (4) inserted into two adjacent slots (3) to guide the arms (6) in a fixed direction, distinct from the direction of the arms (6) in their slot (3).

2. Equipment according to Claim 1, **characterized in that** the first point (14) is situated a fixed distance from a bearing surface (15) of the shaper (10) on the magnetic circuit (2) and **in that** the fixed distance is nonzero.

3. Equipment according to either of the preceding claims, **characterized in that** it comprises a second series of guide-pins (25) equal in number to the slots (3) and designed so that each penetrates into a hole (26) of the shaper (10), each hole (26) being drilled along an axis, the axes of the holes meeting at a second point (27) on the axis of revolution (5) of the shaper (10), the second point (27) being at a distance from the first point (14), each guide-pin (25) of the second series being designed to guide the arms (6) in a direction parallel to the direction of the arms (6) in their slot (3).

4. Equipment according to one of the preceding claims, **characterized in that** the shaper (10) comprises a conical part (30) designed to move the arms (6) of the pins (4) away from an axis (5) of the magnetic circuit (2).

5. Equipment according to one of the preceding claims, **characterized in that** it comprises a second shaper (35) axisymmetric about an axis (5), the second shaper (35) being designed to be placed inside the bends (7) in the pins (4) and in contact with the magnetic circuit (2), a third series of guide-pins (36) equal in number to the slots (3) and designed so that each penetrates into a hole (37) of the second shaper (35), each hole (37) being drilled along an axis, the axes of the holes (37) meeting at a point (38) on the axis of revolution (5) of the second shaper (35), each guide-pin (36) of the third series being designed to separate two arms (6) of pins (4) threaded into two adjacent slots (3) so as to position the bends (7) in the pin (4) at a fixed distance from the magnetic circuit (2).

6. Method for producing coils of a stator (1) of an electrical machine, the coil comprising several windings, each winding being formed by connecting arms (6) of conducting pins (4) inserted into the slots (3) of a magnetic circuit (2) of the stator (1), the method using equipment according to one of the preceding claims, **characterized in that** it consists in successively carrying out the following operations:
- inserting the pins (4) into the slots (3) according to a wiring scheme for the coil;
- putting the first shaper (10) into place along the axis of revolution (5) of the magnetic circuit (2) on the free side of the arms (6) in contact with the magnetic circuit (2);
- putting the first series of guide-pins (12) into place;
- folding each of the arms (6) by pressing it onto a guide-pin (12) of the first series.

7. Method according to Claim 6, using equipment according to Claim 3, **characterized in that** it consists, after having folded each of the arms (6) by pressing it onto a guide-pin (12) of the first series, in successively carrying out the following operations:
- putting the second series of guide-pins (25) into place;
- folding the arms (6) by pressing onto a guide-pin (25) of the second series so as to guide them in a direction parallel to the direction of the arms (6) in their slots (3); and
- connecting the arms (6) in accordance with a wiring scheme for the coil.

8. Method according to either of Claims 6 and 7, using equipment according to Claim 5, **characterized in that** it consists **in that**, before inserting the pins (4) into the slots (3), the second shaper (35) is put in place pressing against the magnetic circuit (2) and the third series of guide-pins (36) is placed in the holes (37).

## Patentansprüche

1. Werkzeug zur Herstellung einer Spule eines Stators (1) einer elektrischen Maschine, wobei die Spule mehrere Wicklungen aufweist, wobei jede Wicklung durch Verbindung von Armen (6) leitender Nadeln (4) geformt wird, die in Aussparungen (3) eines Magnetkreises (2) des Stators (1) eingefügt sind, **dadurch gekennzeichnet, dass** es einen gemäß einer Achse (5) drehsymmetrischen Formgeber (10) aufweist, wobei der Formgeber (10) dazu bestimmt ist, innerhalb von freien Enden der Arme (6) und in Auflage auf dem Magnetkreis (2) angeordnet zu werden, wobei die Drehachse (5) des Formgebers (10) mit der Achse (5) des Magnetkreises (2) zusammenfällt, und eine erste Reihe von Stiften (12) in gleicher Anzahl wie die Aussparungen (3) und dazu bestimmt, je in ein Loch (13) des Formgebers (10) einzudringen, aufweist, wobei jedes Loch (13) gemäß einer Achse gebohrt ist, wobei die Achsen der Löcher in einem ersten Punkt (14) der Drehachse (5) des Formgebers (10) konvergieren, wobei jeder Stift (12) dazu bestimmt ist, zwei Arme (6) einer Nadel (4) zu trennen, die in zwei aneinandergrenzende Aussparungen (3) eingeführt sind, um die Arme (6) in einer bestimmten Richtung auszurichten, die sich von der Richtung der Arme (6) in ihrer Aussparung (3) unterscheidet.

2. Werkzeug nach Anspruch 1, **dadurch gekennzeichnet, dass** der erste Punkt (14) sich in einem bestimmten Abstand von einer Auflagefläche (15) des Formgebers (10) auf dem Magnetkreis (2) befindet, und dass der bestimmte Abstand ungleich Null ist.

3. Werkzeug nach einem der vorhergehenden Ansprüche, **dadurch gekennzeichnet, dass** es eine zweite Reihe von Stiften (25) in gleicher Anzahl wie Aussparungen (3) aufweist, die dazu bestimmt sind, je in ein Loch (26) des Formgebers (10) einzudringen, wobei jedes Loch (26) gemäß einer Achse gebohrt ist, wobei die Achsen der Löcher in einem zweiten Punkt (27) der Drehachse (5) des Formgebers (10) konvergieren, wobei der zweite Punkt (27) einen Abstand zum ersten Punkt (14) hat, wobei jeder Stift (25) der zweiten Reihe dazu bestimmt ist, die Arme (6) in einer Richtung parallel zur Richtung der Arme (6) in ihrer Aussparung (3) auszurichten.

4. Werkzeug nach einem der vorhergehenden Ansprüche, **dadurch gekennzeichnet, dass** der Formgeber (10) einen kegeligen Bereich (30) aufweist, der dazu bestimmt ist, die Arme (6) der Nadeln (4) von einer Achse (5) des Magnetkreises (2) zu entfernen.

5. Werkzeug nach einem der vorhergehenden Ansprüche, **dadurch gekennzeichnet, dass** es einen zweiten gemäß einer Achse (5) drehsymmetrischen Formgeber (35) aufweist, wobei der zweite Formgeber (35) dazu bestimmt ist, innerhalb von Scheiteln (7) der Nadeln (4) und in Auflage auf dem Magnetkreis (2) angeordnet zu werden, und eine dritte Reihe von Stiften (36) in gleicher Anzahl wie Aussparungen (3) und dazu bestimmt, je in ein Loch (37) des zweiten Formgebers (35) einzudringen, aufweist, wobei jedes Loch (37) gemäß einer Achse gebohrt ist, wobei die Achsen der Löcher (37) in einem Punkt (38) der Drehachse (5) des zweiten Formgebers (35) konvergieren, wobei jeder Stift (36) der dritten Reihe dazu bestimmt ist, zwei Arme (6) einer Nadel (4) zu trennen, die in zwei aneinandergrenzende Aussparungen (3) eingefügt sind, um die Scheitel (7) einer Nadel (4) in einem bestimmten Abstand von Magnetkreis (2) zu positionieren.

6. Verfahren zur Herstellung einer Spule eines Stators (1) einer elektrischen Maschine, wobei die Spule mehrere Wicklungen aufweist, wobei jede Wicklung durch Verbindung von Armen (6) leitender Nadeln (4) geformt wird, die in Aussparungen (3) eines Magnetkreises (2) des Stators (1) eingefügt sind, wobei das Verfahren ein Werkzeug nach einem der vorhergehenden Ansprüche verwendet, **dadurch gekennzeichnet, dass** es darin besteht, die folgenden Vorgänge zu verknüpfen:
• Einfügen der Nadeln (4) in die Aussparungen (3) gemäß einem Schaltplan der Spule;
• Einsetzen des ersten Formgebers (10) gemäß der Drehachse (5) des Magnetkreises (2) auf der freien Seite der Arme (6) in Auflage gegen den Magnetkreis (2);
• Einsetzen der ersten Reihe von Stiften (12);
• Umbiegen der Arme (6), je durch Drücken auf einen Stift (12) der ersten Reihe.

7. Verfahren nach Anspruch 6, das ein Werkzeug nach Anspruch 3 verwendet, **dadurch gekennzeichnet, dass** es darin besteht, nachdem die Arme (6) je durch Drücken auf einen Stift (12) der ersten Reihe umgebogen wurden, die folgenden Vorgänge zu verknüpfen:
• Einsetzen der zweiten Reihe von Stiften (25);
• Umbiegen der Arme (6) durch Drücken auf einen Stift (25) der zweiten Reihe, um sie in einer Richtung parallel zur Richtung der Arme (6) in ihre Aussparungen (3) auszurichten;
• Herstellung des Anschlusses der Arme (6) gemäß einem Schaltplan der Spule.

8. Verfahren nach einem der Ansprüche 6 oder 7, das ein Werkzeug nach Anspruch 5 verwendet, **dadurch gekennzeichnet, dass** es darin besteht, vor dem Einführen der Nadeln (4) in die Aussparungen (3) den zweiten Formgeber (35) in Auflage auf den Magnetkreis (2) einzusetzen und die dritte Reihe von Stiften (36) in die Löcher (37) einzusetzen.
